# EUROPÄISCHE PATENTSCHRIFT

(11) **EP 0 916 003 B1**
(45) Veröffentlichungstag und Bekanntmachung des Hinweises auf die Patenterteilung: **27.12.2000**
(21) Anmeldenummer: 97931713.8
(22) Anmeldetag: 05.07.1997
(51) Int. Cl.: E01C 13/08, F16C 29/02, F16C 29/08, F16C 33/10

(54) **SPORTFELD, INSBESONDERE FUSSBALLFELD, UND VERFAHREN ZU DESSEN HORIZONTALVERLAGERUNG**
SPORTS FIELD, IN PARTICULAR FOOTBALL FIELD, AND PROCESS FOR HORIZONTALLY DISPLACING THE SAME
TERRAIN DE SPORT, NOTAMMENT TERRAIN DE FOOTBALL, ET PROCEDE POUR DEPLACER HORIZONTALEMENT LEDIT TERRAIN

(30) Priorität: 27.07.1996 DE 19630423
(43) Veröffentlichungstag der Anmeldung: 19.05.1999
(73) Patentinhaber: Schiess-Defries Engineering, Immobilien- und Bauträger GmbH, 47299 Duisburg (DE)
(72) Erfinder: PEULER, Raimund, D-58339 Breckerfeld (DE); WESSEL, Georg, D-47929 Grefrath (DE)
(74) Vertreter: Vomberg, Friedhelm, Dipl.-Phys.
(86) Internationale Anmeldenummer: DE9701436
(87) Internationale Veröffentlichungsnummer: WO9804778

(56) Entgegenhaltungen:
- AT-A- 380 501
- DE-A- 2 112 086
- DE-A- 3 611 753
- GB-A- 1 495 042
- GB-A- 2 263 644
- US-A- 3 515 444

## Beschreibung

Die Erfindung betrifft ein Sportfeld, insbesondere für Mannschaftsspiele wie Fußball, mit einem aus Rasen, Granulat oder sonstigem natürlichen und/oder künstlichen Belag bestehenden Spielfeld auf einem Unterbau, insbesondere aus Erde und/oder Kies oder ähnlichem, das einschließlich Unterbau (21) auf einem vorzugsweise wannenförmig ausgebildeten Tragrahmen (22) aufliegt, der im wesentlichen aus Beton und/oder Stahlteilen besteht und der über Gleitkissen, die sich auf feststehenden Gleitbahnen (23) abstützen, horizontal verschiebbar ist, wobei die Gleitkissen an der auf den Gleitbahnen (36, 46) aufliegenden Flächen aus Polytetrafluorethylen (PTFE) und die Gleitbahnen (23, 36, 46) aus beschichtetem Stahl oder aus austenitischem Stahl, bestehen.

Ein solches Sportfeld ist beispielsweise aus der GB 2 263 644 A bekannt.

Die Erfindung betrifft ferner ein Verfahren zur Horizontalverlagerung dieses Sportfeldes.

Die derzeit bekannten Fußballstadien besitzen ein Rasen-Spielfeld mit einer den Spielfeldnormen entsprechenden Größe, die etwa 75 m x 115 m sein kann. Ggf. ist das Spielfeld noch mit einer für Leichtathletikwettbewerbe geeigneten Laufbahn versehen. Um das Spielfeld und ggf. das Laufbahnoval sind Zuschauerränge angeordnet. Es sind auch Stadien bekannt, die teilweise überdacht sind. Einige der Fußballfelder besitzen Drainagen, die zur Ableitung des Sickerwassers während und nach starken Regenfällen sorgen. In Einzelfällen sind auch bereits zusätzlich Rasenheizungen installiert worden, beispielsweise im Münchener Olympiastadion, um die Bespielbarkeit bzw. Benutzbarkeit des Rasenplatzes auch im Winter gewährleisten zu können. Der Rasen kann dann schnee- und eisfrei sowie weitgehend trocken gehalten werden.

Der Bau und die Unterhaltung solcher Stadien sind relativ teuer, weshalb aus wirtschaftlichen Erwägungen ein Bedürfnis besteht, diese Stadien auch für andere Veranstaltungen, wie z.B. Konzertveranstaltungen, nutzen zu können. Allerdings wird hierbei die Rasenfläche entweder unmittelbar oder durch die hierauf aufgelegte Abdeckung in Mitleidenschaft gezogen.

Daneben sind Mehrzweckhallen, wie beispielsweise die Dortmunder Westfalenhalle bekannt, bei der die für beliebige Veranstaltungen nutzbare Innenfläche sowie die Zuschauerränge vollständig überdacht sind. Je nach Veranstaltung, wie z.B. Bahnradrennen, Tennis oder Mannschaftsspielen, wie Handball, Volleyball, oder Schauspiel- oder Konzertdarbietungen, wird der Halleninnenraum durch jeweiligen Belagaustausch hergerichtet. Der bei bestehenden Hallen in Europa nutzbare Innenraum ist jedoch zu klein, um ein Fußballfeld aufnehmen zu können. Aber selbst eine entsprechend groß dimensionierte Mehrzweckhalle wäre für eine dauerhafte Rasenfläche ungeeignet, da es an natürlichen Wachstumsbedingungen (Sonneneinstrahlung, Regen) bei geschlossener Halle fehlt. Diese Bedingungen können auch nur zum Teil durch ein aufklappbares bzw. verschiebbares Dach geschaffen werden. In jedem Fall bleibt der Nachteil, daß der Rasen bei Mehrfachbelastung derart stark in Mitleidenschaft gezogen wird, daß er den gewünschten Anforderungen bereits nach kurzer Zeit nicht mehr genügt. Andererseits ist ein solcher Rasen nur zeitweise notwendig, wie beispielsweise bei regelmäßig in 14-tägigem Abstand stattfindenden Fußballspielen. Eine Lösung dieses Problems könnte durch Verwendung von sogenannten Rollrasen geschaffen werden, der in Streifenabschnitte geschnitten und jeweils ab- und aufgerollt wird, jedoch ist eine solche Verfahrenstechnik nicht nur aufwendig und dementsprechend teuer, sondern auch ungeeignet, da der Rollrasen dann nicht den notwendigen Verbund zur Unterlage (Erdreich) hat und das ständige Auf- und Abrollen schon in kurzer Zeit zu einem Absterben des Rasens führt. Hier setzt die vorliegende Erfindung an.

Es ist Aufgabe der Erfindung, ein Sportfeld der eingangs genannten Art zu schaffen, das ohne die vorgenannten Nachteile horizontal in kurzer Zeit ohne Beeinträchtigung des Sportfeldes, insbesondere eines Rasens, unter Aufbringung einer an allen Angriffspunkten gleichmäßigen Schubkraft verlagert werden kann. Hiermit soll ermöglicht werden, insbesondere ein RasenSpielfeld komplett in der Zeit, in der diese Fläche nicht genutzt wird, aus einer Halle nach außen verlagern zu können.

Diese Aufgabe wird durch das Sportfeld nach Anspruch 1 gelöst. Das gesamte Sportfeld einschließlich Unterbau liegt auf einem vorzugsweise wannenförmig ausgebildeten Tragrahmen auf, der im wesentlichen aus Beton und/oder Stahlteilen besteht und der über Gleitkissen, die sich auf feststehenden Gleitbahnen abstützen, horizontal verschiebbar ist. Vorzugsweise erstrecken sich die Gleitbahnen von einem vollständig oder teilweise überdachten Stadion oder einer Mehrzweckhalle bis zu einem daneben angeordneten Platz, der insbesondere ein Parkplatz sein kann. Diese Konstruktion besitzt den Vorteil, daß nur bei den Sportveranstaltungen, die eine Rasenfläche als Unterlage voraussetzen, der komplette Tragrahmen in die Halle geschoben wird und hiernach wieder ins Freie zurückverschoben werden kann, so daß der Rasen den natürlichen Bedingungen ausgesetzt werden kann. Die Gleitbahnen lassen sich in der Mehrzweckhalle oder dem Stadion im Boden anordnen, wo sie begehbar bleiben. Entsprechendes gilt hinsichtlich des Außenplatzes, der begehbar bzw. als Parkplatz befahrbar ist. Auf diese Weise wird die Schaffung eines Stadions möglich, das für jedwede Veranstaltung variabel hinsichtlich des Innenraumes gestaltet werden kann, so daß sich die mittels der Verschiebekonstruktion aufzuwendenden Kosten in kurzer Zeit amortisieren. Grundsätzlich erstreckt sich die vorliegende Erfindung auf alle mit natürlichen Pflanzen versehene Flächen größeren Ausmaßes, die nur zeitweise an einen bestimmten Ort, nämlich eine Halle, verbracht und nach Nutzung wieder nach außen verschoben werden sollen.

Zur Horizontalverschiebung des Tragrahmens sind mehrere Verschiebegeräte vorgesehen, die jeweils auf in den Boden parallel zu den Gleitbahnen eingelassenen Profilen an deren Oberflansch sukzessive an mehreren Stellen festklemmbar sind, vorzugsweise über Klemmklauen, und die über vorzugsweise hydraulisch ausfahrbare Zylinder bei festgeklemmtem Verschiebegerät horizontale Druck- oder Schubkräfte seitlich auf den Tragrahmen ausüben. Durch diese Maßnahme kann die zum Verschieben des Tragrahmens samt Auflage notwendige große Schubkraft auf mehrere Verschiebegeräte verteilt werden. Unterstellt man ein Gesamtgewicht von 104000 kN des zu verschiebenden Gesamtgewichtes und sieht man 384 Gleitkissen vor, so beträgt die Last je Gleitlager ca. 270 kN, wobei entsprechend ungleicher Gewichtsverteilung Schwankungen um bis zu 80 kN einkalkuliert werden sollen. Die notwendige Verschubkraft zur Überwindung der Haftreibung ist bei vier Verschiebegeräten mit je zwei Zylindern mit 8 x 900 kN und im Gleitbetrieb mit ca. 8 x 360 kN zu dimensionieren.

In der festgeklemmten Stellung wirkt jedes Verschiebegerät als Horizontallager für die Hubzylinder, die sich einerseits am Verschiebegerät abstützen und das Spielfeld bzw. den Tragrahmen ziehend oder drückend jeweils um eine Hubweite bewegen können. Nach Lösen der Klemmung und Hochfahren der Kolben können die Hubzylinder wieder eingefahren werden, wobei sie das Verschiebegerät einen Zylinderhub weiterziehen, das dann abermals über die genannten Klauen verklemmt wird, wonach die Hubzylinder zum Vorschub des Tragrahmens einschließlich Auflage wieder ausfahren usw., bis die gesamte Distanz überwunden ist, über die der Tragrahmen entlang der Gleitbahnen zu verschieben ist. Die Klemmkraft sollte mit 4 x 15000 kN ausreichend dimensioniert werden.

Die Verschiebegeräte sind mit einer Wegmeßeinrichtung und einer Hubsynchronisation verbunden bzw. ausgestattet. Hierdurch wird ein gleichmäßiger Vorschub bzw. eine an den Angriffspunkten gleichmäßige Vorschubkraft gewährleistet. Ggf. zusätzlich kann unter der Spielfeldmitte im Unterbau eine Führungsbahn angeordnet sein, in der federnd gelagerte, mit dem Tragrahmen verbundene Führungsrollen laufen, die mit einer Schieflaufüberwachung zur Steuerung der Hubsynchronisation, zur Einleitung eines etwa erforderlichen Korrekturhubes eines oder mehrere Verschiebegeräte und/oder zur etwaigen Zwangsabschaltung der Verschiebegeräte verbunden sind.

Um in dem Stadion oder der Mehrzweckhalle keinen Zuschauerplatz zu verschenken, ist nach einer weiteren Maßnahme vorgesehen, daß der Tragrahmen unterhalb einer im Stadion oder einer Mehrzweckhalle befindlichen Zuschauertribüne, die dort eine Durchführungsöffnung aufweist, verschiebbar ist. Die betreffende Öffnung kann durch Schiebetore, Klappen oder ähnliches verschließbar sein.

Die Anzahl der Gleitkissen wird durch das Gewicht der Tragkonstruktion und des darauf befindlichen Sportfeldes bestimmt, das bei einem Rasenspielfeld von etwa 75 m x 115 m über 100000 kN beträgt. Bei solch hohen Gewichten werden vorzugsweise Gleitkissen mit an der auf den Gleitbahnen aufliegenden Fläche aus Polytetrafluorethylen (PTFE) und Gleitbahnen aus Stahl mit einer speziellen Beschichtung verwendet. Kombinationen aus PTFE, das auch unter dem Handelsnamen Teflon bekannt ist, und austenitischem Stahl sind zwar bereits im Brückenbau als Ausgleichslager verwendet worden, jedoch sind die dortigen Verschubwege relativ gering. Überraschenderweise konnte festgestellt werden, daß Gleitkissen mit Polytetrafluorethylen-Platten, die auf mit einem Gleitfilm versehenen beschichteten Gleitbahnen laufen, zur Verschiebung hoher Gewichte über weite Strecken geeignet sind. Grundsätzlich können die nach dem Stand der Technik bekannten Schmiermittel, wie Silikonöl oder Lithiumseife, verwendet werden, vorzugsweise wird jedoch ein dünner wasserlöslicher Fett- und/oder Ölfilm auf den Gleitbahnen verwendet. Die Gleitkissen, d.h. die PTFE-Platten besitzen unterseitig an der den Gleitbahnen zugekehrten Seite Schmierkalotten und/oder Öl- bzw. Fettverteilungsnuten, welche die Gleitfähigkeit unter Minimierung des Reibungswertes erhöhen. Bei den verwendeten Werkstoffkombinationen PTFE/Schmierfett bzw. -öl und beschichtetem Stahl konnten Gleitreibungen von 0,018 bis 0,025 erreicht werden. Zur Überwindung der Haftreibungen ist die Vorschubkraft so auszulegen, daß ein Verschieben bis zu einem Reibungswert von 0,07 zur Überwindung des Losbrechmomentes möglich sind.

Nach einer weiteren Ausgestaltung der Erfindung stützt sich der Tragrahmen über mehrere Vertikalstützen ab, die in mehreren Reihen im Abstand voneinander nebeneinander angeordnet sind, also an sogenannten Last-Knotenpunkten. Diese Stützen bestehen vorzugsweise aus Beton mit Verankerungsplatten, an deren Unterseite (Beschreibung von oben nach unten) eine Trägerplatte, jeweils mehrere Elastomerkörper mit eingelegten Spießblechen, um die horizontale Schubfestigkeit des Elastomers zu erhöhen, und schließlich mehrere PTFE-Kissen befestigt sind. Die Elastomerschicht ist auf der Trägerplatte aufvulkanisiert und federt unter Last ein, womit Höhendifferenzen der Gleitbahn ausgeglichen werden können. Die unter der Elastomerschicht aufvulkanisierten Stahlplatten (Spießbleche) besitzen Einfräsungen zur Aufnahme und Einkammerung der PTFE-Platten-Einlagen, die vorzugsweise 5 mm dick sind.

Grundsätzlich ist es möglich, per Hand bzw. mit getrennten Hilfsmitteln vor dem Verschieben des Tragrahmens die Gleitbahnen mit einem dünnen Fett- und/oder Ölfilm zu versehen. Um jedoch den diesbezüglichen Aufwand einsparen zu können, ist nach einer weiteren Ausgestaltung der Erfindung vorgesehen, in beiden Verschiebungsrichtungen vor und hinter den PTFE-Kissen an dem Schutzgehäuse oder der Trägerplatte befestigte Öl-/Fett-Verteiler vorzusehen, die vorzugsweise über Schlauchleitungen hydraulisch mit Öl und/oder Fett gespeist werden und die oberhalb der Gleitbahnen angeordnet sind. Durch ein entsprechendes Leitungssystem kann somit die benötigte Menge an Fett und/oder Öl automatisch während des Vorschubes aufgetragen werden.

Um die unterhalb der Trägerplatte vorgesehenen Teile insbesondere vor Staub und Schmutz zu schützen, ist an der Betonverankerung ein die Trägerplatte sowie die hieran befestigten Teile oben und seitlich umhüllendes Schutzgehäuse befestigt, das vorzugsweise an den den Gleitbahnen zugewandten Stirnflächen auf den Gleitbahnen geführte Schmutzabstreifer aufweist. Hierdurch wird beim Vorschub eine Vorreinigung der Gleitbahnen möglich, so daß sich etwa hierauf abgelagerter Schmutz nicht mit den Fett- und/oder Öl vermischen kann. Das Schmutzgehäuse kann jedoch auch anderweitig befestigt sein, solange jeder Ölverteiler und der Zwischenraum zwischen dem Ölverteiler und den PTFE-Kissen geschützt ist.

Für etwaige Reparatur- oder Austauscharbeiten einzelner Teile der Gesamtvorrichtung ist unterhalb des Tragrahmens ein begehbarer Inspektionsraum vorgesehen, der sich vorzugsweise über die gesamte Tragrahmen- und Spielfeldbreite erstreckt.

Die Gleitbahnen selbst bestehen nach einer Ausgestaltung der Erfindung aus Breitflachstahl oder Blech mit gerundeten Kanten und sind an ihrer Unterseite mit Nelson-Kopfbolzen verschweißt und/oder mittels Hülsendübeln und Stellschrauben höhenjustierbar und/oder in Dünnbettmörtel vergossen. Die genannten Maßnahmen, die zusammen oder einzeln getroffen werden können, ermöglichen eine optimale Ausrichtung und Verankerung der Gleitbahnen in der vorauszusetzenden Horizontallage.

Alternativ können die Gleitbahnen insbesondere oberhalb des Inspektionsraumes aus Stahl-Biegeträgern bestehen, die auf Fundamenten oder Pfahlköpfen ruhen.

Die Gleitbahnen sind mit einer Oberflächenbeschichtung einer Dicke zwischen 300, vorzugsweise 340 bis maximale 440 µm versehen, die eine gleitwertoptimierte apfelsinenartige Hautoberfläche aufweist. Diese Apfelsinenhaut ermöglicht es, daß sich das Schmiermittel in den Tälern fängt und die Gleitwerte verbessert werden. Der Anstrich sollte so beschaffen sein, daß er widerstandsfähig und schlagfest ist, damit die Gleitbahn-Stahl-Kerne vor Korrosion geschützt sind.

Die Gleitbahnen selbst können aus mehreren Teilstücken mit einer zwischen zwei Teilstücken und an den Enden befindlichen dauerelastischen Fuge (Dehnfuge) bestehen. Schließlich können nach einer weiteren Ausgestaltung der Erfindung an der Gleitbahnunterseite im Bereich eines Gleitbahnendes oder Gleitbahnteilstückendes PTFE/Austenit-Gleitlager angeordnet sein, wie sie grundsätzlich aus dem Brückenbau bekannt sind, um Dehnfugen des Unterbodens zu berücksichtigen.

Vorzugsweise sind im Ober- und Unterflansch einer Gleitbahnbrücke Öffnungen für Reparaturarbeiten vorgesehen, durch welche auszutauschende PTFE-Einlagen durchführbar sind.

Die Gleitbahnbrücke ist weiterhin vorzugsweise mit höhenverstellbaren Auflagern versehen, um die einbetonierten Gleitbahnenden mit den Brückenenden auf gleiche Höhe einstellen zu können.

Die eingangs gestellte Aufgabe wird weiterhin durch das im Anspruch 10 beschriebene Verfahren gelöst, daß eine sukzessive Verschiebung des Tragrahmens in einzelnen durch Zylinderhub der Verschiebegeräte bestimmten Schritten.

Weitere Ausgestaltungen der Erfindung werden im folgenden anhand der Zeichnungen erläutert. Es zeigen
- Fig. 1: eine Prinzipdarstelllung des erfindungsgemäßen Sportfeldes mit Andeutung der Gleitbahnen,

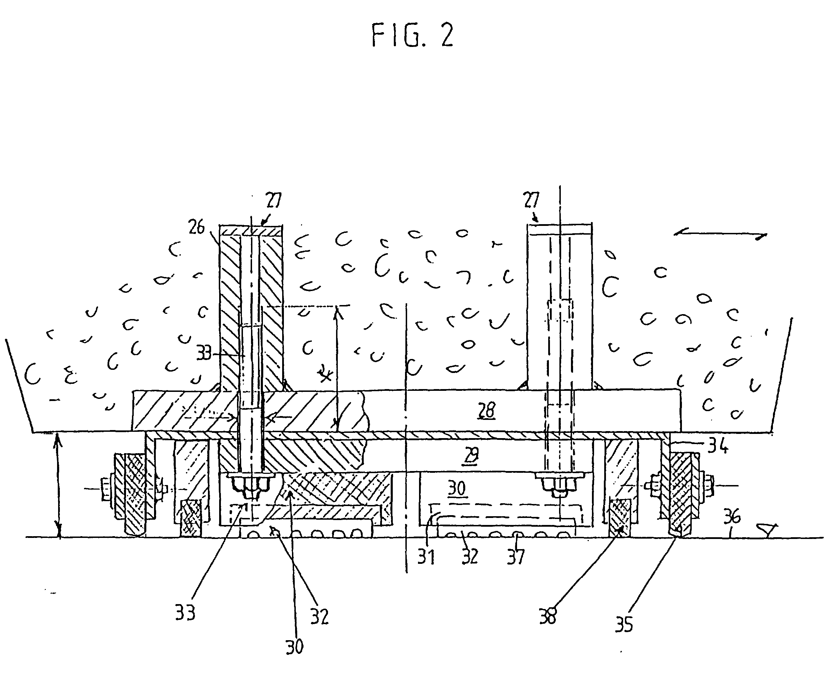

- Fig. 2 und 3: jeweils unterschiedliche teilgeschnittene Seitenansichten des Aufbaues unter den Tragrahmenstützen,
- Fig. 4: einen Teilschnitt durch eine Schienenbrücke und deren Lagerung im Bereich eines Inspektionsraumes,
- Fig. 5: eine Schnittansicht eines Reparaturfensters im Bereich einer Schienenbrücke gemäß Fig. 4,
- Fig. 6: die Verankerung eines Auflagers für eine Schienenbrücke auf einer Stützwand,
- Fig. 7: eine Schnittdarstellung der Verankerung der Gleitbahn auf einem Betonbalken,
- Fig. 8: eine Schnittdarstellung zweier Gleitbahnenden,
- Fig. 9: eine Schnittansicht eines Profiles zur Klemmhalterung eines Verschiebegerätes,
- Fig. 10a, b: jeweilige Seiten- und Schnittansichten des Profilträgers im Bereich des Inspektionsraumes und
- Fig. 11: zwei Ansichten des Profilträgers nach Fig. 9 und 10 im Bereich eines Gleitbahnendes.

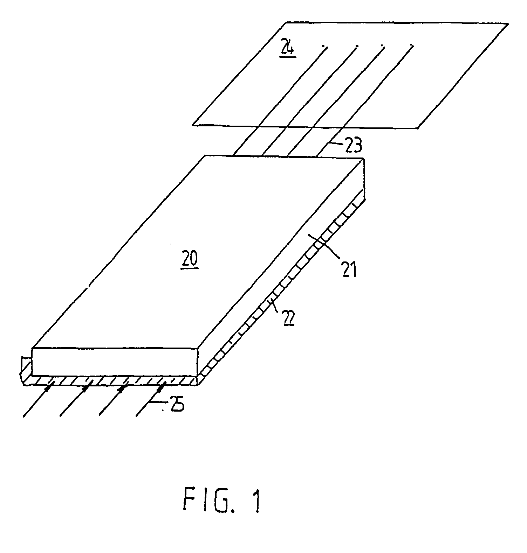

Wie aus Fig. 1 zu erkennen, ist ein gesamter Fußballrasen einschließlich dem im wesentlichen aus Erde und einer Kiesschüttung 21 bestehenden Unterbau auf einem wannenförmigen Tragrahmen 22 angeordnet, dessen Stützen bodenseitig Gleitkissen aufweisen, die sich entlang Gleitbahnen 23 bis in den Bereich eines angedeuteten Platzes 24 erstrecken abstützen und worüber der Tragrahmen durch horizontale Krafteinwirkung in Richtung der Pfeile 25 horizontal verschiebbar ist. Vorzugsweise wird das Fußballfeld aus einem Stadion herausgezogen und zurück wieder hereingeschoben. Der Tragrahmen 22 besteht im wesentlichen aus Beton und/oder Stahl. In dem Tragrahmen bzw. der hierdurch gebildeten Wanne können in der Schüttung 21 auch Drainagerohre, Rasenheizungen oder ähnliche Konstruktionen aufgenommen werden. Das Spielfeld ist rechtwinklig und besitzt beispielsweise eine Größe von 75 m x 115 m. Bei dieser praktischen Ausführungsform werden insgesamt 16 Verschiebebahnen verwendet, die sich von einem nicht dargestellten überdachten Stadion bis hin zu dem als Parkplatz ausgebildeten Platz 24 erstrecken. Das Spielfeld kann, ggf. nach Demontage der Fußballtore oder anderer Aufbauten unter der Gegentribüne aus dem Stadion auf den Parkplatz 24 herausgezogen werden. In der Zeit, in der das Spielfeld im Stadion angeordnet ist, kann der Platz 24 als Pkw-Parkplatz genutzt werden. Zum horizontalen Anschub können vier Verschiebegeräte dienen, welche sich auf vier einbetonierten, weiter unten beschriebenen Verschiebebahnen laufen.

Die Konstruktion des Spielfeldes, auf die weiter unten noch eingegangen wird, ist ca. 1,2 m hoch, von unten bekriechbar, d.h. mit einem Raum unter dem Spielfeldboden in einer Höhe von ca. 0,6 m ausgestattet. Vor der Gegentribüne, durch welche das Spielfeld und der Tragrahmen 22 herausfahrbar sind, wird im Stadion-Unterboden ein begehbarer Inspektionsraum angeordnet, welcher sich über die gesamte Spielfeldbreite unter dem Tragrahmen 22 erstreckt, so daß nachfolgend beschriebene Stützen, Gleitkissen, Schmiereinrichtungen und Verrohrungen von unten kontrolliert werden können. Die Gleitkissen werden auf den Gleitbahnen 23 mit wasserlöslichem Öl geschmiert. Um die Reibwerte gering zu halten, wurde die Kombination von Gleitkissen aus PTFE, Schmiermittel aus Fett bzw. Öl und eine Gleitbahn aus einem beschichteten Stahl gewählt. Erzielbare Gleitreibungskoeffizienten lagen im Bereich von µ = 0,018 bis 0,025. Aus Sicherheitsgründen werden für die bei längeren Stillständen eintretende Haftreibung die Komponenten für Gleitreibungen von etwa 0,07 ausgelegt und die Verschiebegeräte, Hydraulikzylinder und Bahnbefestigungen entsprechend dimensioniert, um bei der Haftreibung ein Losbrechmoment aufbauen zu können. Nach dem Verschub des Feldes können die Gleitbahnen mit warmem Wasser von Fett bzw. Öl befreit bzw. gereinigt werden.

Einem speziellen Ausführungsbeispiel lagen folgende technische Daten zugrunde:

| | |
|---|---|
| Gewicht Fußballfeld | 104.000 kN |
| Menge der Gleitlager | 384 |
| Last je Gleitlager | 270±80 kN |
| Setzung der Gleitbahnen | max. 5 und |
| | ±2,5 mm auf 2,5 m Länge |
| Verschubkraft max. | 8 x 900 kN |
| Verschubkraft Betrieb | ∼8 x 360 kN |
| Gleitfaktor | 2 - 5 % |
| Geschwindigkeit Hubzylinder | max. 1,8 m/min |
| | mittl. 1,6 m/min |
| Hub der Zylinder | 1,0 m |
| Geschwindigkeit Spielfeld | |
| bei Gleitfaktor ≤2,75 % | max. 0,8 m/min |
| | mittl. 0,7 m/min |
| bei Gleitfaktor 3,4 % | max. 0,65 m/min |
| | mittl. 0,57 m/min |
| bei Gleitfaktor 4 % | max. 0,55 m/min |
| | mittl. 0,48 m/min |
| bei Gleitfaktor 5 % | max. 0,44 m/min |
| | mittl. 0,385 m/min |
| Anschlußwerte der Verschiebegeräte | 4 x 40 kVA |
| Verschub je Woche | 1 |
| | d.h. 16 km in 2 Jahren |
| Flächenpressung Gleitbahn/Gleitlager | 10 - 20 N/mm² |
| Durchschnittlicher Ölverbrauch je | |
| Verschub | 30 - 50 l |

Der Tragrahmen 22 ruht auf mehreren in Reihen nebeneinander angeordneter Stützen, die sich mit ihren unteren Enden auf Beton-Verankerungsplatten 26, 27, 28 abstützen. Die eigentlichen Gleitlager, von denen im vorliegenden Fall 384 verwendet wurden, bestehen aus einer Trägerplatte 29, einer Zwischenschicht 30 aus einem Elastomer mit eingelegten Spießblechen und anvulkanisierten Stahlplatten 31 mit Einfräsungen für PTFE-Einlagen 32. Die Trägerplatte 29 wird mit Schrauben 33 mit der Betonverankerung 26, 27, 28 und den Stützen befestigt. Um die Trägerplatte sowie die darunterliegenden Teile ist ein Schutzgehäuse 34 mit stirnseitig angeordneten Abstreifern 35 vorgesehen, welche die eingehausten Teile vor Schmutz schützen und wobei die Abstreifer zu einer Gleitbahn-Vorreinigung dienen. Auf der Trägerplatte 29 ist eine Elastomerschicht 30 aufvulkanisiert, welche unter Last einfedert und Höhendifferenzen der Gleitbahn 36 ausgleichen kann. Auf der Elastomerschicht sind Stahlplatten 31 aufvulkanisiert, in der Einfräsungen zur Aufnahme und Einkammerung der PTFE-Platten 32 vorgesehen sind. Die Platten 32 sind ca. 5 mm dick und besitzen auf der Gleitfläche Schmierkalotten und Öl-/Fettverteilungsnuten 37. In Verschieberichtung vor und hinter dem beschriebenen Gleitlager sind Ölverteilerleisten 38 mit mehrschichtigen Filzstreifen angeordnet. Diese Ölverteilerleisten 38 sind mit einer zentralen Schmieranlage verbunden. Durch elektrisch gesteuerte Öldosierung kann das Öl in Intervallen in die Filzstreifen gelangen und zieht auf die Gleitbahnen 36 einen dünnen Schmierfilm auf. Auf diesem Schmierfilm gleiten die PTFE-Platten 32 mit Gleitreibungen zwischen etwa 0,018 bis 0,025. Die PTFE-Platten sind auswechselbar, vorzugsweise über einen Inspektionsraum, der noch beschrieben wird.

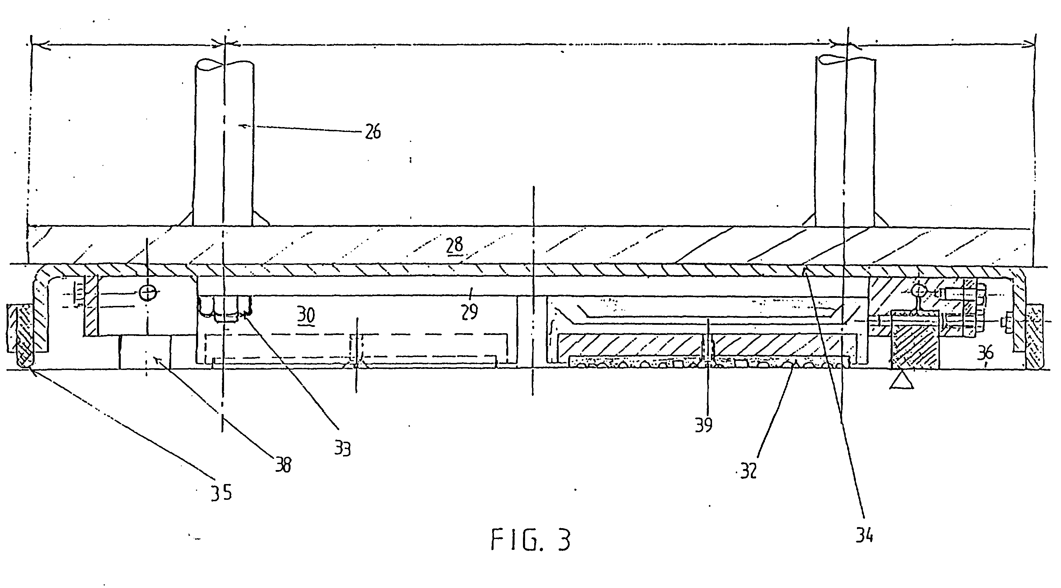

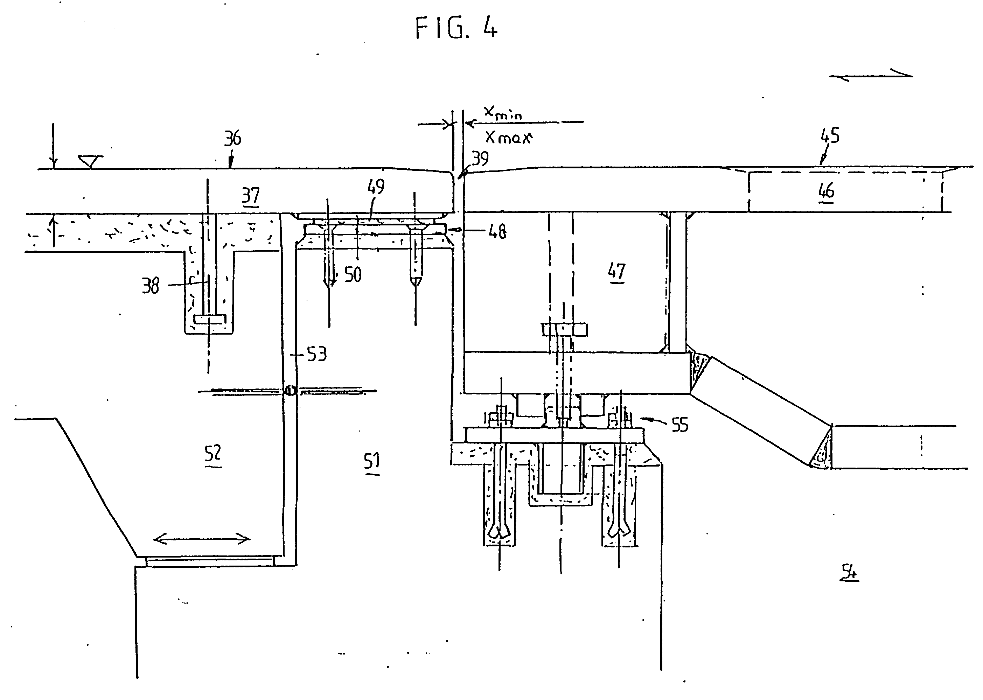

Wie zusätzlich aus Fig. 3 ersichtlich, werden die PTFE-Platten 32 mittels Senkschrauben 39 an den anvulkanisierten Stahlplatten 31 befestigt. Der Abstand der Vertikalstützen 26 sowie die Größe der Betonverankerung 26, 27, 28 sind im wesentlichen vom Gewicht der zu verschiebenden Spielfläche, deren Unterbau und dem Tragrahmen 22 abhängig, jedoch kann beispielsweise ein seitlicher Abstand der Vertikalstützen Reihen von 3,20 m und ein Abstand der Vertikalstützen in einer in Bewegungsrichtung verlaufenden Reihe von ca. 4,5 m gewählt werden. Die in Fig. 4 bis 8 dargestellten Gleitbahnen 36 bestehen aus Breitflachstahl 37 oder Blech mit gerundeten Kanten. An der Unterseite sind Nelson-Kopfbolzen 38 vorgesehen, die an der Unterseite der Breitflachstähle 37 verschweißt sind. Die Größe und der Abstand der Bolzen 38 bestimmen sich nach der zu übertragenden Horizontallast, beispielsweise können in einem Abstand von 1 m zwei solcher Bolzen 38 verwendet werden. Zwischen zwei aneinanderstoßenden Breitflachstahlstirnseiten kann eine Dehnfuge 39 vorgesehen sein, die mittels eines dauerelastischen Materials 40 verfugt ist. Die Gleitbahnen können mittels Hülsendübeln 41 und Stellschrauben 42 auf Höhe justiert und mit schrumpfarmem Mörtel 43 vergossen werden. Auf den Ober- und Seitenflächen werden die Gleitbahnen mit einer Gleitbeschichtung 44 versehen. Diese Beschichtung besteht aus einer Stahlentrostung Sa 2 1/2n. DIN 55928 T.4, einem 40 µm dicken Grundanstrich Intershield Primer EGA 780/EGA 784, einem Zwischenanstrich Intershield Dickschicht, rot, EGA 100/EGA 103 von 150 µm und einem Deckanstrich von ebenfalls 150 µm aus gleichem Material wie die Zwischenschicht. Die Gesamtbreite der Gleitbahnbeschichtung liegt somit zwischen 340 µm bis maximal 440 µm. Die Oberfläche der Gleitbahn 36 bzw. der Beschichtung 44 ist apfelsinenhautartig, wobei sich in den Oberflächentälern das Schmiermittel fängt und damit sehr gute Gleitwerte erbringen kann. Ggf. sind kleinere Gleitbahnstücke zunächst zu einer kompletten Gleitbahn zu verschweißen und hiernach zu beschichten, um die gesamte Gleitbahn zu erhalten. Es ist jedoch ebenso möglich und wie in Fig. 4 dargestellt, eine Gleitbahn aus einem Flachstahl 37 mit einer Gleitbahnbrücke 45, die aus einem Biegeträger 46 aus Stahl besteht und deren Enden 47 auf Fundamenten oder Pfahlköpfen aufliegen, zu kombinieren. In diesem Fall ist auch der Biegeträger 46 auf seiner Oberseite beschichtet. In dem in Fig. 4 dargestellten Fall ist das Ende des Flachstahles 37 unterseitig durch ein Gleitlager 48 abgestützt, das im wesentlichen aus einer PTFE-Platte 49 und einer Austenitstahlplatte 50, die mit Öl oder Fett gleitend gemacht werden, gebildet. Die betreffende Stütze 51 bildet mit dem benachbart liegenden Gleitbahnunterbau 52 ebenfalls die dargestellte Dehnfuge 53.

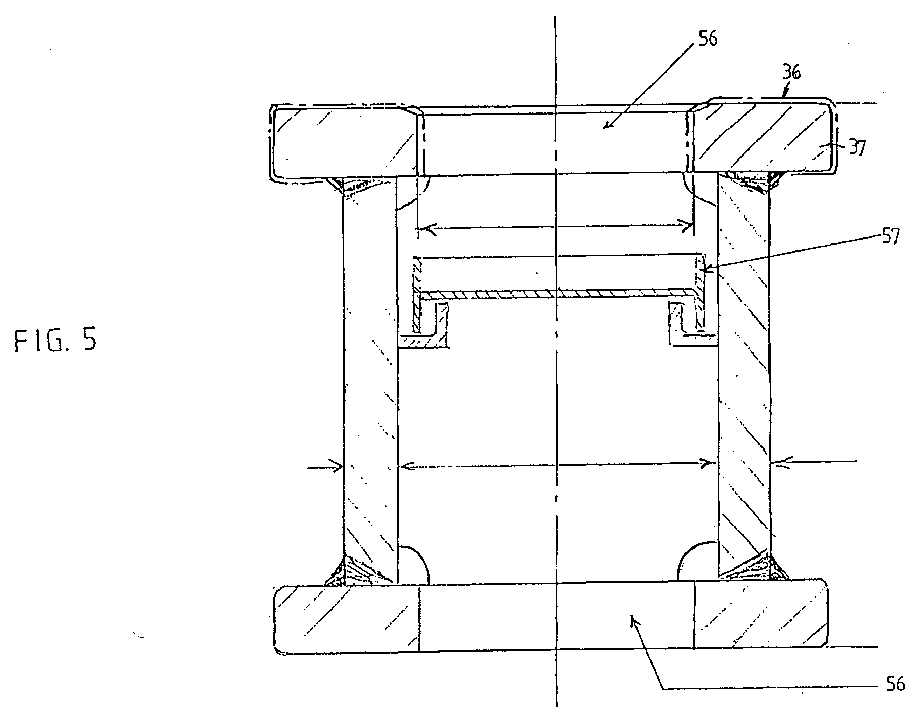

Die Fig. 4 entnehmbare Schienenbrücke wird zur Überbrückung eines begehbaren Inspektionsraumes 54 unter dem Spielfeld benötigt. Die Brücke 45 vervollständigt sozusagen die Gleitbahn 36 über dem Inspektionsraum. Die gesamte Gleitbahnbrücke ist mit höhenverstellbaren Auflagern 55 versehen, um das Brückenende in der Höhe ausrichten zu können. Weiterhin kann bei abgesenkter Schienenbrücke 45 das gesamte Gleitlager entlastet und seitlich ausgebaut werden, d.h. rasterweise können die Gleitlager kontrolliert und ggf. ersetzt werden. Im Ober- und Unterflansch ist jeweils entsprechend Fig. 5 eine Hand- und Reparaturöffnung 56 vorgesehen, um PTFE-Platten bei Beschädigung bzw. Verschleiß auswechseln zu können. Oberhalb der Handöffnung kann eine Ölauffangschale 57 bzw. Ablage angeordnet sein.

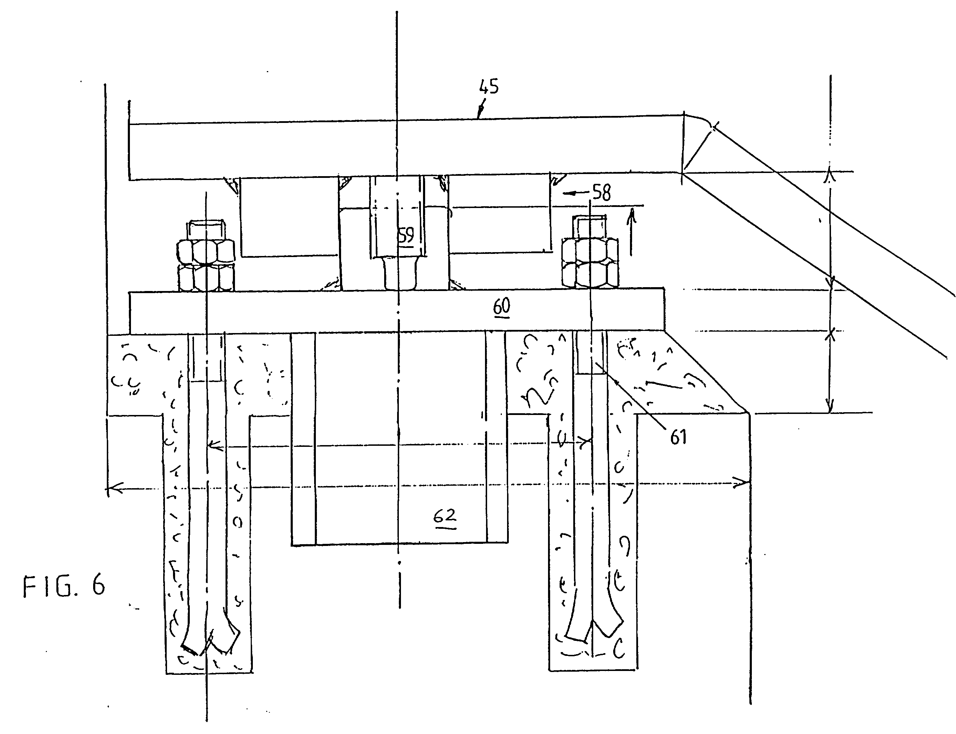

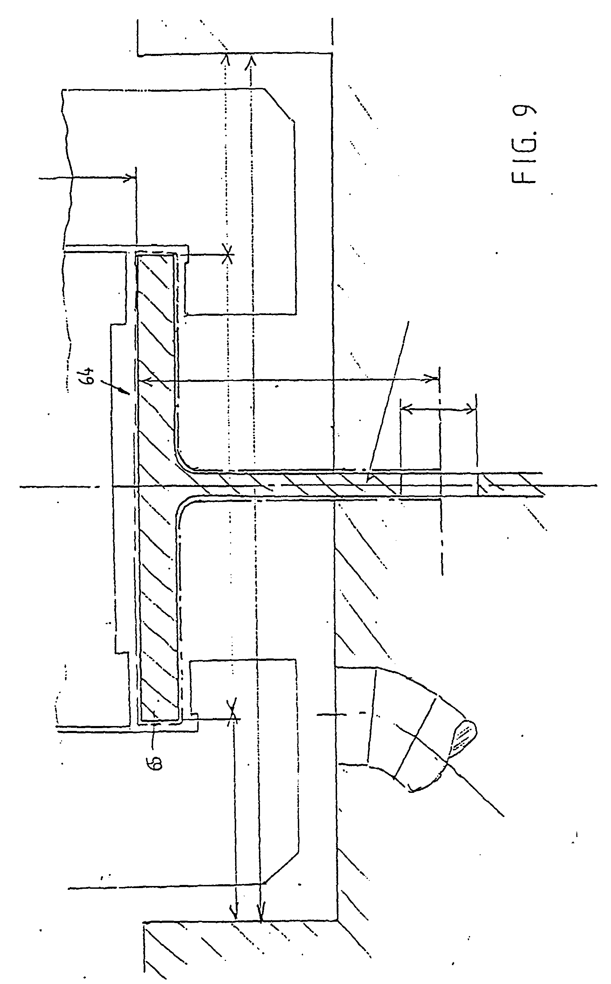

Fig. 6 zeigt ein Schienenbrückenende 45 mit einem höhenverstellbaren Lager 58, das über Stellschrauben 59 höhenverstellbar ist. Als Widerlager dient eine Gegenplatte 60, die mit vier Steinschrauben 61 und jeweiligen Schubankern 62 befestigt wird.

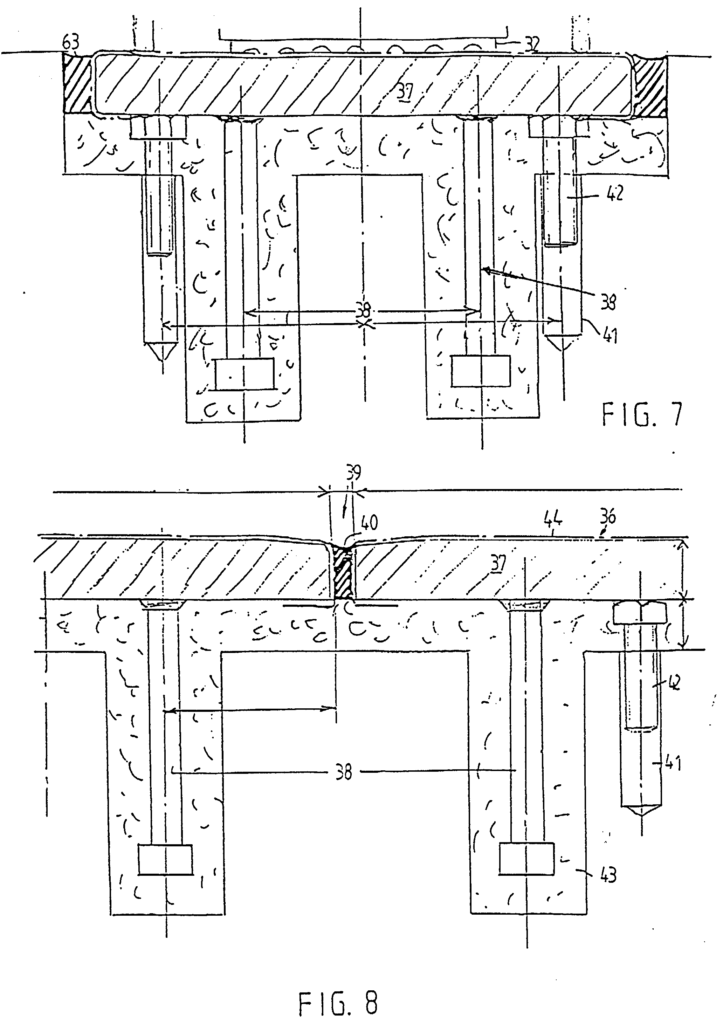

Wie aus Fig. 7 ersichtlich sind die Gleitbahnen seitlich mit dauerelastischen Fugen 63 versehen.

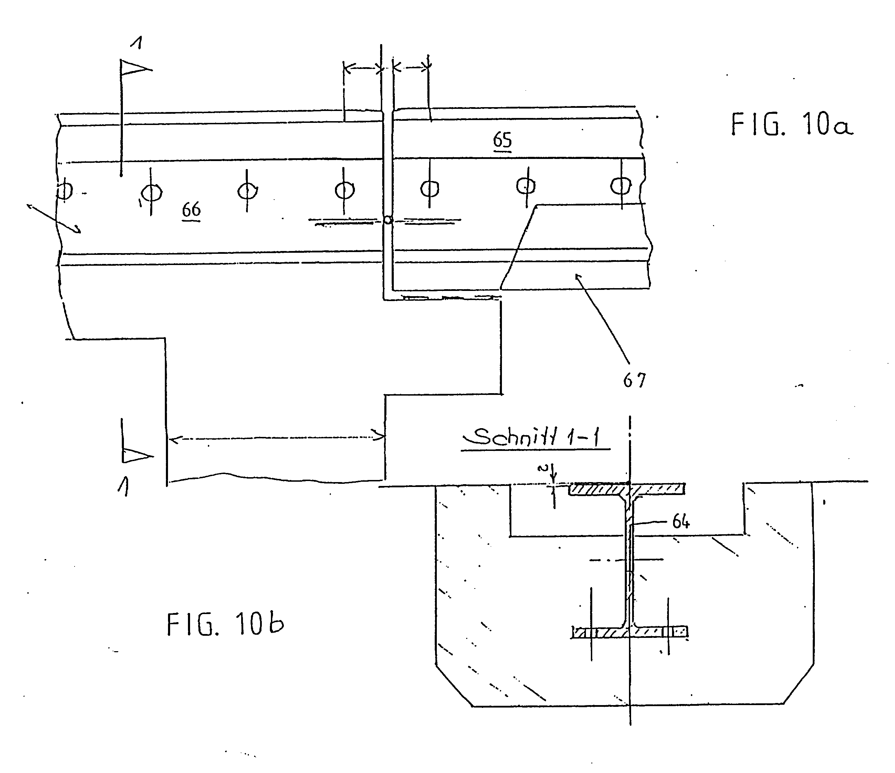

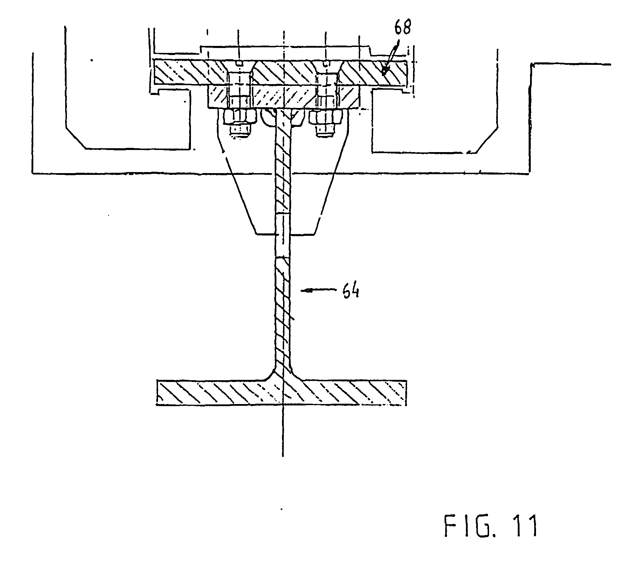

Für das Festklemmen eines Verschiebegerätes dient der in Fig. 9 bis 11 dargestellte Verschiebeträger 64, der sich parallel zu den Gleitbahnen über eine Teil-Länge erstreckt und der aus einem T- oder I-Profil besteht, an dessen Oberflansch 65 die Klauen eines Verschiebegerätes festklemmbar sind. Verwendet man zur Horizontalverschiebung des Tragrahmens 22 vier Verschiebegeräte, so sind in entsprechender Weise in äquidistantem Abstand voneinander vier Verschiebebahnen angeordnet. Durch Klauenklemmung der Verschiebegeräte an den Oberflanschen 65 ist es möglich, diese jeweils für einen Hub ihrer Zylinder ortsfest zu befestigen. Um die Verschubkräfte aufnehmen zu können, sind in den Stegen 66 der Verschiebebahnen Löcher vorgesehen, durch die der Betonbau Bewehrungseisen anordnet, und damit eine Verbundkonstruktion schafft. Das gesamte Profil 64 wird zu zwei Drittel mit Beton 67 einbetoniert. Lediglich der Oberflansch 65 und Teile des Steges 66 dienen als Klammerhalterung für das Verschiebegerät. Am Ende bzw. Anfang der Verschiebebahnen wird eine Ein- und Ausbauöffnung für die Verschiebegeräte vorgesehen, wo die Klemmklaue des nicht dargestellten Verschiebegerätes durch Entfernen der geschraubten Oberplatte 68 ein- und ausgebaut werden kann.

Die Verschiebegeräte (vgl. Katalog der Fa. Schiess-Defries Nr. 571-HYVG/9012 W, Typ 3100-3900) selbst bestehen aus einem Schmiedeteil mit Zylinderbohrungen zur Aufnahme vertikal laufender, doppelt wirkender Kolben. Diese Kolben drücken über eine Druckplatte auf den Oberflansch der Verschiebebahn. Seitlich werden an den Grundkörper Klemmklauen angeschraubt, welche sich bei Druckkraft auf die Druckplatte unter den Oberflansch 65 krallen. In dieser festgeklemmten Stellung wirkt das Verschiebegerät als Horizontallager für die Verschiebezylinder, die sich am Verschiebegerät abstützen und das Spielfeld bzw. den Tragrahmen 22 jeweils um eine Hubweite weiterziehen oder -drücken können. Nach einem Hub, der synchron von allen Verschiebegeräten durchgeführt wird, wird die Klemmung gelöst, d.h. die Kolben fahren hoch und der Verschiebezylinder fährt ein, wobei er das Verschiebgerät einen Zylinderhub weiterzieht. Hiernach erfolgt das abermalige Verklemmen des Verschiebegerätes, das Ausfahren des Verschubzylinders usw., bis die gesamte Verschublänge durchlaufen ist. Die Verschiebezylinder können mit und ohne Wegmeßeinrichtung eingesetzt werden, wobei für die Steuerung des Spielfeldverschubes Zylinder mit Wegmeßeinrichtungen zweckmäßig sind. Die vier verwendeten Verschiebegeräte mit acht Vorschubzylindern werden durch eine Schieflaufüberwachung gesteuert. Die Verschubkraft der Zylinder ist in Abhängigkeit vom Gewicht des Spielfeldes zu wählen und kann im konkreten Anwendungsfall 8 x 900 kN betragen. Die Verschiebegeräte sollten mit einer Klemmkraft von 4 x 15000 kN anklemmbar sein.

Zusätzlich kann in der Mitte des Spielfeldes längs unter dem Spielfeld im Unterboden eine Führungsbahn angeordnet sein, in der federnd gelagerte Führungsrollen laufen, welche an der Spielfeldkonstruktion befestigt sind. Diese Rollen dienen dazu, einen linearen Verschub parallel zur Längsachse des Feldes zu überwachen. Durch Anordnung von Schaltelementen zur Schieflaufüberwachung kann bei Abweichung außerhalb der Rechtwinkligkeit zur Verschiebeachse ein Abschalten der Verschiebegeräte bewirkt werden. Nach Korrekturhub wird das Spielfeld weiter verschoben. Vorzugsweise ist das Spielfeld mit Warnleuchten versehen, welche während des Verschubes in Betrieb geschaltet werden. An allen Ecken des Spielfeldes bzw. Rahmens 22 sind Not-Ausschalter angeordnet, zusätzlich ist während des Verschubes ein akustisches Warnsignal in Betrieb.

Von einer unter dem Spielfeld angeordneten nicht dargestellten Pumpstation mit einem Tank wird pneumatisch das Schmiermittel für die einzelnen Ölverteiler 38 über Hauptrohrleitungen, Absperrungen, Progressivverteiler und Schlauchleitungen redundant zu den Gleitlagern geführt. Die betreffenden Rohrleitungen und Schlauchleitungen können unterhalb des Spielfeldes in Kabelkanälen verlegt sein. Ggf. sind Unterverteiler zur Versorgung von einzelnen Gruppen von Stützreihen, z.B. acht Gleitkissen vorgesehen. Das Öl wird bei Betätigung der Verschiebegeräte mit Intervallen einstellbar in die Ölverteiler und von dort aus auf die Gleitbahnen 36, 45 gepumpt. Die Filzleisten ziehen auf der Gleitbahn einen dünnen Schmierfilm auf. Die Schmieranlage wird vorzugsweise elektrisch betrieben, wozu eine entsprechende Verkabelung unter dem Spielfeld vorgesehen ist. Das Spielfeld bzw. der Tragrahmen 22 kann über Schleifleitungen mit Strom versorgt werden.

Schließlich können Steuergeräte für die Verschubgeräte einschließlich einem Totmannschalter vorgesehen sein. Die Steuergeräte sind auch in der Lage, bei Schieflauf auf einen Einzelbetrieb der Vorschubgeräte umzuschalten. Die Steuergeräte werden den Erfordernissen nach mit der Schieflaufüberwachung verkoppelt und geben das erforderliche Signal für die Schmiereinrichtung.

## Patentansprüche

1. Sportfeld (20), insbesondere für Mannschaftsspiele wie Fußball, mit einem aus Rasen (20), Granulat oder sonstigen natürlichen und/oder künstlichen Belag bestehenden Spielfeld auf einem Unterbau (21), inbesondere aus Erde und/oder Kies oder ähnlichem, das einschließlich Unterbau (21) auf einem vorzugsweise wannenförmig ausgebildeten Tragrahmen (22) aufliegt, der im wesentlichen aus Beton und/oder Stahlteilen besteht und der über Gleitkissen, die sich auf feststehenden Gleitbahnen (23) abstützen, horizontal verschiebbar ist, wobei die Gleitkissen an der auf den Gleitbahnen (36, 46) aufliegenden Flächen aus Polytetrafluorethylen (PTFE) und die Gleitbahnen (23, 36, 46) aus beschichtetem Stahl oder aus austenitischem Stahl, bestehen,
**dadurch gekennzeichnet,**
daß zur Horizontalverschiebung des Tragrahmens (22) mehrere Verschiebegeräte vorgesehen sind, die jeweils auf in den Boden parallel zu den Gleitbahnen (23, 36) eingelassenen Profilen (64) an deren Oberflansch (65) sukzessive an mehreren Stellen festklemmbar sind, vorzugsweise über Klemmklauen, und die über vorzugsweise hydraulisch ausfahrbare Zylinder bei festgeklemmtem Verschiebegerät horizontale Druck- oder Schubkräfte seitlich auf den Tragrahmen (22) ausüben und daß die Verschiebegeräte mit einer Wegmeßeinrichtung und einer Hubsynchronisation verbunden sind, wozu unter der Spielfeldmitte im Unterboden eine Führungsbahn angeordnet ist, in der federnd gelagerte, mit dem Tragrahmen (22) verbundene Führungsrollen laufen, die mit einer Schieflaufüberwachung zur Steuerung der Hubsynchronisation, zur Einleitung eines Korrekturhubes eines oder mehrerer Verschiebegeräte und/oder zur etwaigen Zwangsabschaltung der Verschiebegeräte verbunden sind.

2. Sportfeld nach Anspruch 1, dadurch gekennzeichnet, daß sich die Gleitbahnen (23) von einem vollständig oder teilweise überdachten Stadion oder einer Mehrzweckhalle bis zu einem daneben angeordneten Platz, vorzugsweise Parkplatz (24) erstrecken, wobei vorzugsweise der Tragrahmen (22) unter einer im Stadion oder einer Mehrzweckhalle befindlichen Zuschauertribüne verschiebbar ist.

3. Sportfeld nach einem der Ansprüche 1 oder 2, dadurch gekennzeichnet, daß die Gleitkissen Schmierkalotten und/oder Öl- und/oder Fettverteilungsnuten (37) aufweisen und/oder daß Vorrichtungen (38) zum Auftragen eines dünnen Fett- und/oder Ölfilmes, der vorzugsweise wasserlöslich ist, auf den Gleitbahnen (23, 36, 46) vorgesehen sind.

4. Sportfeld nach einem der Ansprüche 1 bis 3, dadurch gekennzeichnet, daß der Tragrahmen (22) sich über mehrere Vertikalstützen, die in mehreren Reihen im Abstand voneinander nebeneinander angeordnet sind, auf vorzugsweise aus Beton bestehenden Verankerungsplatten (26, 27, 28) abstützt, an deren Unterseite eine Trägerplatte (29), jeweils mehrere Elastomerkörper (30) mit anvulkanisierten Blechen (31) und schließlich mehrere PTFE-Kissen (32) befestigt sind, wobei vorzugsweise in beiden Verschiebungsrichtungen vor und hinter den PTFE-Kissen (32) an einem Schutzgehäuse (34) oder der Trägerplatte (29) Öl-Fett-Verteiler (38), die weiterhin vorzugsweise über Schlauchleitungen hydraulisch mit Öl und/oder Fett gespeist werden und die oberhalb der Gleitbahnen (36) angeordnet sind, befestigt sind.

5. Sportfeld nach Anspruch 4, dadurch gekennzeichnet, daß an der Betonverankerung (26, 27, 28) ein die Trägerplatte (29) sowie die hieran befestigten Teile oben und seitlich umhüllendes Schutzgehäuse (34) befestigt ist, das vorzugsweise an den den Gleitbahnen (36) zugewandten Stirnflächen auf den Gleitbahnen (36) geführte Schmutzabstreifer (35) aufweist.

6. Sportfeld nach einem der Ansprüche 1 bis 5, dadurch gekennzeichnet, daß unterhalb des Tragrahmens (22) ein begehbarer Inspektionsraum (54), vorzugsweise über die gesamte Tragrahmen- und/oder Spielfeldbreite (20, 22) angeordnet ist und/oder daß die Gleitbahnen (36) aus Breitflachstahl (37) oder Blech mit gerundeten Kanten bestehen und an ihrer Unterseite mit Nelson-Kopfbolzen (38) verschweißt sind und/oder mittels Hülsendübeln (41) und Stellschrauben (42) höhenjustierbar und/oder in Dünnbettmörtel (43) vergossen sind.

7. Sportfeld nach einem der Ansprüche 1 bis 6, dadurch gekennzeichnet, daß die Gleitbahnen, insbesondere oberhalb eines Inspektionsraumes (54) aus Stahl-Biegeträgern (46) bestehen, die auf Fundamenten oder Pfahlköpfen (47) ruhen und/oder daß die Gleitbahnen mit einer Oberflächenbeschichtung einer Dicke zwischen 300, vorzugsweise 340 bis maximale 440 um versehen ist, die eine gleitwertoptimierte apfelsinenartige Hautoberfläche aufweist.

8. Sportfeld nach einem der Ansprüche 6 oder 7, dadurch gekennzeichnet, daß die Gleitbahnen aus mehreren Teilstücken mit einer zwischen zwei Teilstücken und an den Enden befindlichen dauerelastischen Fuge (Dehnfuge) bestehen, wobei vorzugsweise an der Gleitbahnunterseite im Bereich eines Gleitbahnendes oder Gleitbahnteilstückes ein PTFE/Austenit-Gleitlager (48) angeordnet ist, um Dehnfugen des Unterbodens zu überbauen.

9. Sportfeld nach einem der Ansprüche 7 oder 8, dadurch gekennzeichnet, daß im Ober- und Unterflansch einer Gleitbahnbrücke (45) Öffnungen (56) für Reparaturarbeiten vorgesehen sind, durch welche auszutauschende PTFE-Kissen (32) durchführbar sind und/oder daß die Gleitbahnbrücke (45) mit höhenverstellbaren Auflagern (55) versehen ist, um die einbetonierten Gleitbahnenden mit den Brückenenden einstellen zu können.

10. Verfahren zur Horizontalverlagerung des das Sportfeld tragenden Rahmens, dadurch gekennzeichnet, daß jeweils an Profilen (64) die Klauen der Verschiebegeräte und an der Tragrahmenstirnfläche die freien Enden der Hubzylinder eines Verschiebegerätes befestigt werden und daß gleichzeitig alle Hubzylinder um denselben Hub synchron ausgefahren werden, so daß der Tragrahmen (22) um den Hub auf dem mit einem Öl- und/oder Fettfilm versehenen Gleitbahnen (23, 36, 45) vorwärts bewegt wird, daß die Klauen gelöst, die Hubzylinder wieder eingefahren und hieran die Klauen wieder hubabstandsversetzt an den Profilen (64) befestigt werden und die Hubzylinder wieder ausgefahren werden, und daß dies so oft wiederholt wird, bis die gewünschte Horizontalgesamtverschiebung erreicht ist.

## Claims

1. Sports field, in particular for team sports like soccer, with a playing surface formed of grass (20), particles, or such natural and/or artificial material on a substrate (21), in particular of earth and/or clay or the like, the entire playing field (20) including the substrate (21) lies on a preferably trough-shaped support frame (22) that is mainly formed of concrete and/or steel members, and the support frame (22) is horizontally slidable via slide pads on stationary slide tracks (23), whereby the slide pads on the surfaces of the slide tracks (36, 46) consist of polytetrafluorethylene (PTFE) and the slide tracks (23, 36, 46) are made of coated steel or austenitic steel,
**characterized in that**
in order to horizontally move the support frame (22) there is a plurality of slide actuators that can each grab on the upper flange (65) of a respective profile (64) set in the ground parallel to the slide tracks (23, 36) at successive locations, preferably via clamping jaws, and that can exert horizontally directed push or pull forces laterally on the support frame (22) when clamped preferably by means of hydraulically actuated cylinders and that the slide actuators are connected with a travel-detecting device and a stroke synchronizer, that underneath the center of the playing field in the ground there is a guide track in which ride spring-loaded guide rollers connected to the support frame (22) and which are connected to skewness detector for controlling the stroke synchronization, for executing a correcting action of one or more slide actuators, and/or for emergency shutting down of the slide actuators.

2. Sports field according to claim 1, characterized in that the slide tracks (23) extend from a fully or partially covered stadium or multipurpose hall to an adjacent outside space, preferably a parking lot (24), whereby preferably the support frame (22) is slidable underneath reviewing stands in the stadium or multipurpose hall.

3. Sports field according to one of the claims 1 or 2, characterized in that the slide pads have lubricant pockets and/or oil- and/or grease-distributing grooves and/or that devices (38) for applying a thin grease and/or oil film, which preferably is water soluble, are provided on the slide tracks (23, 26, 46).

4. Sports field according to one of claims 1 to 3, characterized in that the support frame (22) is supported on a plurality of vertical posts which are arranged in several parallel rows standing on anchor plates (26, 27, 28) preferably made of concrete, on each of whose undersides is a support plate (29), on several respective elastomeric bodies (30) vulcanized to plates (31), and finally on several PTFE pads (32), whereby preferably oil/grease applicators (38) are provided relative to the two slide directions in front of and behind the PTFE pads (32) on a protective housing (34) of the support plate (29), which are preferably supplied with oil and/or grease by hoses, and which are mounted above the slide tracks (36).

5. Sports field according to claim 6, characterized in that a protective housing (34) is secured on the concrete anchor (26, 27, 28) which extends around and over the support plate (29) and the parts secured thereto and which preferably has dirt scrapers (35) guided on the slide tracks (36) and mounted on edges turned toward the slide tracks (36).

6. Sports field according to one of claims 1 to 5, characterized in that underneath the support frame (22) there is an accessible inspection space (54), preferably along the entire support-frame or playing-field width (20, 22) and/or that the slide tracks (36) are formed of wide steel bars (37) or sheet metal with rounded edges and are welded on theier undersides to nelson-head bolts (38) and/or adjustable with respect to height by means of threaded sleeves (41) and screws (42) and/or are set in a thin bed (43) of mortar.

7. Sports field according to one of claims 1 to 6, characterized in that the slide tracks are formed, in particular above an inspection space (54) as steel beams (46) that sit on footings or footing posts (47) and/or that the slide tracks have a surface coating of a thickness from 300, preferably 340, to at most 400 µm which has an orange-peel surface optimized for sliding friction.

8. Sports field according to one of claims 6 or 7, characterized in that the slide tracks are formed of several pieces with between adjacent pieces at their ends a long-life elastic expansion joint, whereby preferably the slide-track underside is provided in the region of a slide-track end or a slide-track part end with a PTFE/austenite slide bearing (48) to support expansion joints.

9. Sports field according to one of claims 7 or 8, characterized in that upper and lower flanges of a slide-track bridge (45) are provided with openings (56) for repair work through which PTFE pads (32) can be passed for replacement and/or that the slide-track bridges (45) are provided with height-adjustable supports (55) in order to set the concreted-in slide-track ends level with the bridge ends.

10. A method of horizontally shifting the frame carrying the sports field, characterized in that the jaws of the slide actuators are fixed on each of the profiles (64) and the free ends of the cylinders of the slide actuator are fixed on the support-frame end faces and that simultaneously all the cylinders are synchronously actuated so that the support frame (22) is advanced by the cylinder stroke on the oil and/or grease film on the slide tracks (23, 36, 45), that the jaws are released, the cylinders are retracted, and then the jaws are again locked on the profiles (64) and the cylinders are again extended, and that this is repeated until the desired overall horizontal movement is attained.

## Revendications

1. Terrain de sport (20), en particulier pour le sport d'équipe tel que le football, avec un terrain se composant de gazon (20), de granulat ou d'un autre revêtement naturel et/ou artificiel sur une base (21), en particulier de terre et/ou de gravier ou semblable, le terrain de sport, y compris la base (21), repose sur un cadre de support (22) de préférence en cuve qui, pour l'essentiel, est formé de béton et/ou d'éléments en acier et qui peut être déplacé horizontalement par l'intermédiaire de coussins de glissement s'appuyant sur des glissières fixes (23), lesdits coussins de glissement se compsant sur la surface s'appuyant sur les glissières (36, 46) de polytétrafluoréthylène (PTFE) et les glissières (23, 36, 46) se composant d'acier revêtu ou d'acier austénitique,
**caractérisé par le fait que**
pour le déplacement horizontal du cadre de support (22), on prévoit plusieurs appareils de déplacement qui, respectivement, peuvent être fixés par serrage, de préférence par le biais de griffes de serrage, de manière successive à plusieurs endroits sur la bride supérieure (65) de profilés (64) encastrés dans le sol parallèlement aux glissières (23, 36), et qui, lorsque l'appareil de déplacement est serré, exercent des forces horizontales de pression ou de poussée latéralement sur le cadre de support (22) par le biais de cylindres qui peuvent sortir de préférence de manière hydraulique, et que les appareils de déplacement sont reliés à un dispositif de mesure de déplacement et à une synchronisation de course, ce pour quoi une glissière est disposée au-dessous du centre du terrain dans le sous-sol, dans laquelle roulent des galets de guidage logés sur ressorts et reliés au cadre de support (22), qui sont connectés à une surveillance de biaisement pour commander la synchronisation de course, pour provoquer une course de correction d'un ou de plusieurs appareils de déplacement et/ou pour une eventuelle interruption nécessaire des appareils de déplacement.

2. Terrain de sport selon la revendication 1, caractérisé par le fait que les glissières (23) s'étendent d'un stade couvert d'un toit soit complètement soit en partie ou d'un hall à usages multiples jusqu'à une place disposée à côté, de préférence un parc de stationnement (24), de préférence le cadre de support (22) pouvant être déplacé au-dessous d'une tribune du public se trouvant dans le stade ou dans un hall à usages multiples.

3. Terrain de sport selon l'une des revendications 1 ou 2, caractérisé par le fait que les coussins de glissement présentent des calottes de graissage et/ou des rainures de distribution d'huile et/ou de graisse (37), et/ou que des dispositifs (38) destinés à appliquer un mince film de graisse et/ou d'huile qui, de préférence, est soluble dans l'eau, sont prévus sur les glissières (23, 36, 46).

4. Terrain de sport selon l'une des revendications 1 à 3, caractérisé par le fait que le cadre de support (22) s'appuie par plusieurs supports verticaux qui sont disposés en plusieurs rangées l'un à côté de l'autre à distance l'un de l'autre, sur des plaques d'ancrage (26, 27, 28) qui se composent de préférence de béton et sur la face inférieure desquels sont fixés une plaque de support (29), respectivement plusieurs corps d'élastomère (30) avec des tôles (31) fixées par vulcanisation et enfin plusieurs coussins en PTFE (32), de préférence des distributeurs d'huile/graisse (38) étant fixés dans les deux directions de déplacement devant et derrière les coussins en PTFE (32) sur un boîtier de protection (34) ou sur la plaque de support (29), qui, en outre de préférence, sont alimentés de façon hydraulique d'huile et/ou de graisse par des conduites en tuyaux flexibles et sont disposés au-dessus des glissières (36).

5. Terrain de sport selon la revendication 4, caractérisé par le fait qu'un boîtier de protection (34) enveloppant en haut et latéralement la plaque de support (29) ainsi que les parties y fixées est fixé sur l'ancrage en béton (26, 27, 28), ledit boîtier de protection présentant de préférence sur les fronts montrant vers les glissières (36) des racleurs d'impuretés (35) qui sont guidés sur les glissières (36).

6. Terrain de sport selon l'une des revendications 1 à 5, caractérisé par le fait qu'un espace accessible d'inspection (54) est disposé au-dessous du cadre de support (22), de préférence sur l'ensemble de la largeur du cadre de support et/ou du terrain (20, 22), et/ou que les glissières (36) se composent d'acier large plat (37) ou de tôle à arêtes arrondies et sont soudées sur leur face inférieure avec des boulons à tête Nelson (38) et/ou peuvent être ajustées en hauteur par le biais de chevilles en forme de douille (41) et de vis de réglage (42) et/ou sont enrobées dans une mince couche de mortier (43).

7. Terrain de sport selon l'une des revendications 1 à 6, caractérisé par le fait que les glissières, en particulier au-dessus d'un espace d'inspection (54), se composent de poutres en acier (46) qui reposent sur des fondements ou têtes de pieu (47), et/ou que les glissières sont pourvues d'un revêtement de surface ayant une épaisseur comprise entre 300, de préférence entre 340 et 440 µm au maximum, qui présente une surface de peau ressemblant à une orange, à coefficient optimisé de frottement par glissement.

8. Terrain de sport selon l'une des revendications 6 ou 7, caractérisé par le fait que les glissières se composent de plusieurs parties avec un joint permanentement élastique (joint d'expansion) se trouvant entre deux parties et aux extrémités, de préférence un palier lisse (48) en PTFE/austénite étant disposé sur la face inférieure de la glissière dans la zone d'une extrémité de glissière ou d'une partie de glissière, afin de ponter des joints d'expansion du sous-sol.

9. Terrain de sport selon l'une des revendications 7 ou 8, caractérisé par le fait que les brides supérieure et inférieure d'un pont de glissière (45) sont pourvues d'ouvertures (56) pour des travaux de réparation, à travers lesquelles on peut passer des coussins en PTFE (32) à échanger, et/ou que le pont de glissière (45) est pourvu d'appuis (55) réglables en hauteur, afin de pouvoir régler les extrémités de glissière bétonnées avec les extrémités du pont.

10. Procédé de déplacement horizontal du cadre portant le terrain de sport, caractérisé par le fait que les griffes des appareils de déplacement sont fixées respectivement sur des profilés (64) et les extrémités libres des cylindres d'un appareil de déplacement sont fixées sur le front du cadre de support, et que, en même temps, tous les cylindres sortent synchroniquement de la même course de sorte que le cadre de support (22) est avancé de la course sur les glissières (23, 36, 45) pourvues d'un film d'huile et/ou de graisse, que les griffes sont desserrées, les cylindres sont rentrés et que, ensuite, les griffes - déplacées de la distance de la course - sont à nouveau fixées sur les profilés (64) et les cylindres sortent de nouveau, et que ceci est répété à maintes reprises jusqu'à ce que le déplacement total horizontal souhaité soit atteint.
